# EUROPÄISCHE PATENTSCHRIFT

(11) **EP 2 534 950 B1**
(45) Veröffentlichungstag und Bekanntmachung des Hinweises auf die Patenterteilung: **06.04.2016**
(21) Anmeldenummer: 12172407.4
(22) Anmeldetag: 18.06.2012
(51) Int. Cl.: A01N 43/16, A01N 49/00, A01N 59/08, A01N 59/00, A01P 3/00, A01P 15/00

(54) **Zusammensetzung zur Anwendung an Pflanzen, insbesondere Pflanzenschutzmittel, Pflanzenregenerationsmittel und/oder Pflanzenwachstumsmittel, und Verfahren zur Herstellung dieses**
Compound for use on plants, in particular plant protection agent, plant regeneration agent and/or plant growth agent and method for producing same
Composition destinée à une utilisation sur des plantes, en particulier comme agent phytosanitaire, agent de régénération de plantes et/ou agent de croissance des plantes et procédé de fabrication

(30) Priorität: 16.06.2011 CH 10152011
(43) Veröffentlichungstag der Anmeldung: 19.12.2012
(73) Patentinhaber: Ismaili, Dashmir, 8890 Flums (CH)
(72) Erfinder: Ismaili, Dashmir, 8890 Flums (CH)
(74) Vertreter: Hasler, Erich

(56) Entgegenhaltungen:
- EP-A2- 0 295 352
- WO-A1-03/020234
- WO-A1-03/094882
- DE-A1- 19 904 703
- GB-A- 993 395
- DATABASE WPI Week 197612 Thomson Scientific, London, GB; AN 1976-21411X XP002666822, & JP 51 013676 A (NAKANISHI M) 3. Februar 1976 (1976-02-03)
- DATABASE WPI Week 197603 Thomson Scientific, London, GB; AN 1976-04558X XP002666823, & JP 50 099864 A (YAMASHITA S) 7. August 1975 (1975-08-07)
- MUNNE-BOSCH ET AL: "The role of alpha-tocopherol in plant stress tolerance", JOURNAL OF PLANT PHYSIOLOGY, FISCHER, STUTTGART, DE, Bd. 162, Nr. 7, 1. Juli 2005 (2005-07-01), Seiten 743-748, XP027800331, ISSN: 0176-1617 [gefunden am 2005-07-01]

## Beschreibung

### TECHNISCHES GEBIET DER ERFINDUNG

Die vorliegende Erfindung betrifft ein Pflanzenschutzmittel, ein Pflanzenregenerationsmittel und/oder Pflanzenwachstumsmittel, zur Anwendung an Pflanzen insbesondere als Konzentrat, Giessmittel oder Sprühmittel. Die Erfindung betrifft auch ein Herstellungsverfahren des Pflanzenschutzmittels, Pflanzenregenerationsmittels und/oder Pflanzenwachstumsmittels sowie eine Verwendung des Pflanzenschutzmittels, Planzenregenerationsmittels und/oder Pflanzenwachstumsmittels durch Tränken oder Besprühen von Pflanzen, zur Wachstumsförderung, zur Regeneration und/oder zum Schutz gegen Krankheiten.

### HINTERGRUND DER ERFINDUNG

Pflanzen sind verschiedensten und wechselnden Umwelteinflüssen ausgesetzt, wie z.B. Kälteeinbrüchen, Heisswetterperioden, Trockenheit, Nässe, Schadstoffen in Luft und Boden, Krankheitskeimen usw. Um negative Folgen solcher Einflüsse zu mildem oder zu vermeiden, wird oft zu Pflanzennährstoffen gegriffen. Wachstums- und Regenerationsmittel für Pflanzen sind zahlreich erhältlich. Verschiedenartige Zusammensetzungen wirken dabei unterschiedlich schnell, unterschiedlich stark und unterschiedlich lange und werden dementsprechend eingesetzt. Sind Pflanzen von plötzlichen Umweltveränderungen betroffen, ist die Reaktion der Pflanzen oft sehr heftig; z.B. kann eine Pflanze aufgrund eines kurzen aber heftigen Kälteeinbruchs absterben. Übliche Düngemittel helfen in solchen Extremsituationen oft nicht mehr, da sie z.B. nicht schnell genug von der Pflanze aufgenommen werden können.

Die Offenbarungsschriften JP 51 013676 A, EP 0 295 352 A2, GB 993 395 A und S. Munné-Bosch, "The role of a-tocopherol in plant stress tolerance", J. of Plant Physiology 162 (205) 743-748 offenbaren den Gebrauch von "Tocopherol-Verbindungen, um auf Pflanzen und deren Entwicklung Einfluss zu nehme. Die Offenlegungsschrift Die 199 04 703 A1 offenbart ein wässriges Pflanzenstärkungsmittel enthaltend Tocopherol und/oder Tocopherol-Derivate sowie Methoxyzimtsäure. Optional können als Methoxyzimtsäure-Derivate deren Ammoniumsalz, Metallsalze wie Alkali-, Erdalkali und Eisensalze, Gemische davon, Komplexverbindungen wie die mit Calcium oder Magnesium, insbesondere deren Chelatkomplexe, sowie Ester von C1-10-Alkoholen enthalten sein. Die Offenbarungsschrift JP 50 099864 A offenbart, dass Metalle wie Na, Mg, Fe und Cu oder metallische Verbindungen wie MgO, Fe2O3 und ZnO mit Gemischen aus Ubiquinon und Tocopherol-Derivaten reagieren und das Reaktionsprodukt als Pflanzenwachstumsstimulator verwendet werden kann.

Es ist deshalb eine Aufgabe der vorliegenden Erfindung, eine schnell wirkende Zusammensetzung, welche für das Wachstum und die Regeneration von Pflanzen förderlich ist, bereitzustellen. D.h. es soll ein Pflanzenschutzmittel, insbesondere ein Pflanzenwachstumsmittel bzw. Pflanzenregenerationsmittel bereit gestellt werden, welches die Nachteile des Stands der Technik nicht aufweist oder diese zumindest teilweise vermeidet. Im Weiteren ist es Aufgabe, eine Zusammensetzung bereitzustellen, welche nachteilige Folgen von ungünstigen Umweltbedingungen, wie Frost und saurem Regen, und diversen Krankheiten reduziert. Auch ist es Aufgabe, eine Zusammensetzung bereitzustellen, welche das Wachstum von Pflanzen und/oder die Regeneration nach schädlicher Umwelteinwirkung fördert. Die Wirkung soll sich bei Blüten tragenden Pflanzen wie auch bei Grünpflanzen entfalten. Insbesondere sollen die Wirkzusammensetzungen aus Substanzen bestehen, welche insbesondere für Mensch und Tier unschädlich sind. Zudem soll der Wirkstoff als Flüssigkeit bereit gestellt werden.

### BESCHREIBUNG

Die oben genannten Ziele werden erfindungsgemäss gelöst durch eine wachstumsfördernde und regenerationsfördernde Zusammensetzung zur Anwendung an Pflanzen (d.h. durch ein Pflanzenschutzmittel, Pflanzenregenerationsmittel und/oder Pflanzenwachstumsmittel), insbesondere als Konzentrat, Giessmittel oder Sprühmittel, wobei die Zusammensetzung dadurch gekennzeichnet ist, dass diese zumindest ein Alkalisalz und/oder ein Erdalkalisalz, eine Vitamin E-Verbindung, eine Lösungsmittel und gegebenenfalls Wasser umfasst, wobei das Alkalisalz oder Erdalkalisalz zumindest Magnesiumchlorid beinhaltet. Diese Zusammensetzung hilft bei stark wirkenden und/oder plötzlich eintretenden schädlichen Umwelteinflüssen in kurzer Zeit. Behandelte Pflanzen erholen sich schnell. Die Zusammensetzung ist umweltverträglich und hinterlässt keine schädlichen Rückstände auf Pflanzen und im Boden.

Ein Konzentrat kann kein Wasser oder eine gewisse Wassermenge enthaltend. Ein Konzentrat zeichnet sich vor allem dadurch aus, dass durch weiteres Zufügen von Wasser eine optimale Konzentration zum Besprühen oder Begiessen von Pflanzen bereitgestellt wird.

Zusätzliche Vorteile und Ziele der vorliegenden Erfindung ergeben sich aus der nachfolgenden Beschreibung.

Bevorzugterweise besteht die Vitamin E-Verbindung zumindest aus einem Tocophenol, wobei α-Tocopherol in vielen Fällen die beste Wirkung zeigt.

Das Magnesiumchlorid (MgCl₂) kann zum Beispiel zugegeben werden als MgCl₂•6 H₂O und/oder MgCl₂•4 H₂O.

Das Lösungsmittel, welches von Wasser verschieden ist, dient vorwiegend dazu, die Vitamin E-Verbindung in Lösung zu bringen. Ein ausgewähltes Lösungsmittel sollte somit eine vielfach höhere Löslichkeit für die genannten Vitamin E-Verbindungen besitzen als Wasser. Vorteilhafterweise wird als das Lösungsmittel zumindest ein Alkohol verwendet, zweckmässigerweise ist dies Ethanol oder ein anderes für die Pflanze und ihre Umgebung harmloses und verträgliches Lösungsmittel. Unter dem Begriff Lösungsmittel ist im Rahmen der vorliegenden Beschreibung ein anderes Lösungsmittel als Wasser zu verstehen.

Bevorzugt beträgt das Gewichtsverhältnis von Alkali- oder Erdalkalisalzverbindung zu Vitamin E-Verbindung mindestens 10'000 zu 1 und gegebenenfalls maximal 500'000 zu 1, weiter bevorzugt liegt das Gewichtsverhältnis von Alkali- und/oder Erdalkalisalzverbindung zu Vitamin E-Verbindung im Bereich von 20'000 zu 1 bis 320'000 zu 1.

In einer vorteilhaften Ausführung der Erfindung ist die Zusammensetzung dadurch gekennzeichnet, dass diese eine wässrige Lösung bildet, welche zumindest die folgenden Inhaltsstoffe enthält:
- ein Alkali- oder bevorzugt eine Erdalkalisalzverbindung, zumindest Magnesiumchlorid, bevorzugt in einer Menge von wenigstens 40 g/l, weiter bevorzugt wenigstens 60 g/l, weiter bevorzugt etwa 80 g/l,
- ein Tocopherol, insbesondere α-Tocopherol, bevorzugt in einer Menge von wenigstens 0.05 mg/l, weiter bevorzugt wenigstens 0.75 mg/l, weiter bevorzugt wenigstens 1 mg/l und weiter bevorzugt im Bereich von 1 mg/l bis 3 mg/l und
- ein Lösungsmittel, insbesondere einen Alkohol, wie z.B. Ethanol, bevorzugt in einer Menge von wenigstens 5 ml/l, weiter bevorzugt von wenigstens 10 ml/l, weiter bevorzugt von wenigstens 25 ml/l, weiter bevorzugt wenigstens 40 ml/l, weiter bevorzugt etwa 50 ml/l.

Die erfindungsgemässe Zusammensetzung kann mit folgendem Herstellungsverfahren bereitgestellt werden: die Vitamin E-Verbindung wird im Lösungsmittel aufgelöst und die dabei entstehende Lösung wird mit dem Alkali- oder Erdalkalisalz und gegebenenfalls dem Wasser vermischt.

Zweckmässigerweise kann z.B. das Alkali- oder Erdalkalisalz im Wasser aufgelöst werden. Die Lösung des Alkali- oder Erdalkalisalzes und die Lösung gebildet aus Lösungsmittel und Vitamin E-Verbindung können daraufhin miteinander vermischt werden.

Die erfindungsgemässe Zusammensetzung eignet sich zum Tränken oder Besprühen von Pflanzen. Insbesondere Topfpflanzen können mit dieser Zusammensetzung vorteilhaft behandelt werden.

Zur Anwendung kommt zweckmässigerweise eine wässrige Lösung der erfindungsgemässen Zusammensetzung, welche beim Verdünnen im Giesswasser entsteht oder welche durch Zugabe zum Giesswasser auf eine gewünschte bzw. vorteilhafte Konzentration verdünnt wird. Zweckmässig kann es sein, die gewünschte Verdünnung beim Herstellungsprozess direkt einzustellen, um danach bei Bedarf Pflanzen mit dieser vorbereiteten Verdünnung schnell und unkompliziert begiessen oder besprühen zu können.

Vorteilhafterweise wird die erfindungsgemässe Zusammensetzung bei einem Gehalt der Vitamin E-Verbindung von mindestens 0.5 mg/l (d.h. Milligramm pro Liter der wässrigen Lösung), bevorzugt von mindestens 1 mg/l und weiter bevorzugt von ungefähr 1 mg/l verwendet. Gute Ergebnisse werden auch bei Mengen bis zu 4 mg/l erzielt. Die beste Wirkung ist bei vielen Pflanzen mit Tocopherol, insbesondere dem α-Tocopherol erzielbar. α-Tocopherol wird besonders vorteilhaft im Bereich von 0,5 mg bis 5 mg pro Liter wässrige Lösung und weiter bevorzugt von 1 mg bis 3 mg pro Liter wässrige Lösung verwendet.

Vorteilhafterweise wird die erfindungsgemässe Zusammensetzung bei einem Gehalt der Alkali- oder Erdalkalisalze von mindestens 40 g/ l (i.e. Gramm pro Liter der wässrigen Lösung), bevorzugt von mindestens 60 g/l und weiter bevorzugt von ungefähr 80 g/l verwendet.

Zweckmässigerweise wird die erfindungsgemässe Zusammensetzung mit einem möglichst geringen Gehalt an Lösungsmitteln verwendet. Als vorteilhaft hat sich ein Gehalt des Lösungsmittels von mindestens 5 ml/l (d.h. Milliliter pro Liter der wässrigen Lösung), bevorzugt von mindestens 10 ml/l, weiter bevorzugt von mindestens 25 l/l und weiter bevorzugt von ungefähr 50 ml/l erwiesen. Um die Pflanzen nicht zu schädigen, wird empfohlen einen maximalen Gehalt von 100 ml Lösungsmittel pro Liter wässrige Lösung nicht zu überschreiten. Dieser Grenzwert ist vor allem für Ethanol als Lösungsmittel wünschenswert.

Vorzugsweise werden 5 bis 100 ml Lösungsmittel, wobei Ethanol als Lösungsmittel bevorzugt wird, zur Auflösung von 0,5 mg bis 5 mg einer Vitamin E-Verbindung, wie z.B. α-Tocopherol, verwendet. Die Lösung wird dann mit Wasser und gegebenenfalls dem Alkali- oder Erdalkalisalz gemischt.

Eine besonders schnelle und effiziente Wirkung wird durch Besprühen der Blätter der Pflanzen erzielt (sogenannte Blattdüngung). Die Aufnahme über die Blätter kann begrenzt sein. Somit kann es unter Umständen von Vorteil sein bei längerer Behandlung einer Pflanze mit der erfindungsgemässen wässrigen Lösung zu tränken, wodurch eine stetige Aufnahme über die Wurzeln erfolgen kann.

Zumindest bei Vertretern der folgenden Pflanzenfamilien konnte eine vorteilhafte Wirkung durch Anwendung der erfinderischen Zusammensetzung beobachtet werden: Nachtschattengewächse (wie z.B. Tomaten und Paprika), Kürbisgewächse (wie z.B. Melonen und Gurken), Korbblütler (Gartensalate wie z.B. Eisbergsalate) und Lippenblütler (wie z.B. Rosmarin). Es wurde beobachtet, dass die Pflanzen durch die Behandlung allgemein robuster auf äussere Einflüsse reagieren und auch weniger anfällig für Krankheiten, insbesondere Pilzkrankheiten sind.

Grundsätzlich wird angenommen, dass die erfinderische Zusammensetzung bei allen Pflanzen wirkt, insofern photosynthetisch aktive Pflanzenteile mit der erfinderischen Zusammensetzung erreicht werden, z.B. durch Besprühen der genannten Pflanzenteile oder durch Gießen. Die Gründe dafür könnten damit zusammenhängen, dass Formen von Vitamin E (dazu gehören insbesondere die bevorzugten Formen der Tocopherole und Tocotrienole), welchen allgemein antioxidative Wirkung zugeschrieben wird, bei Pflanzen in die Regulation und Schutzmechanismen der Photosynthese eingreifen können.

Vorteilhafte Wirkungen werden insbesondere lediglich aufgrund der genannten Inhaltsstoffe, d.h. von Alkalisalzen bzw. Erdalkalisalzen, Vitamin E-Verbindungen, Lösungsmitteln und Wasser, erzielt. Auf weitere Zusätze kann verzichtet werden. Insbesondere kann auf den Zusatz von Mikroorganismen verzichtet werden. Auch auf einen Zusatz von Stickstoff- und/ oder Phosphatverbindungen kann verzichtet werden.

Nachfolgend wird die Erfindung anhand von Beispielen erläutert.

### BEISPIEL 1

Herstellung einer erfindungsgemässen Zusammensetzung. Vermischen und Auflösen von 1 mg α-Tocoferol in 50 ml Ethanol. 80 g Magnesiumchlorid in etwas Wasser (vorzugsweise in wenigstens 150 ml) auflösen. Alkoholische Tocoferol-Lösung und wässrige Magnesiumchloridlösung zusammengeben, vermischen und bis auf 1 Liter mit Wasser ergänzen.

### BEISPEIL 2

Junge Paprikapflanzen der Gattung Capsicum, ca. 2 bis 3 Wochen alt, werden mit der Zusammensetzung von Beispiel 1 besprüht. In einem Vergleichsversuch werden junge Paprikapflanzen mit Leitungswasser besprüht.

Messungen der Höhe der Pflanzen vor der Behandlung und 2 Tage nach der Behandlung ergeben, dass bei Verwendung der erfindungsgemässen Zusammensetzung ein Längenwachstum von 4 bis 5 cm und bei Verwendung gewöhnlichen Wassers ein Längenwachstum von 0.5 bis 1 cm gefunden wird.

### BEISPEIL 3

Blühende Rosmarin-Pflanzen der Art Rosmarinus Officinalis (auch Gunder oder Schweizer Rosmarin genannt), verteilt auf verschiedene Töpfe, werden wie folgt besprüht:
1. Erste Proben: mit wässriger Lösung bestehend aus 1 mg α-Tocopherol, 50 ml Ethanol und 80 g Magnesiumchlorid pro 1 Liter (gemäss Beispiel 1).
2. Zweite Proben: mit Leitungswasser.

Nach einer kurzen Ruhepause von ca. 1 Stunde werden die Pflanzen vier Stunden lang einem Kälteschock bei -18°C ausgesetzt. Nach der Entnahme sind alle Pflanzen welk. Während einer Woche wird der Regenerationsprozess der Pflanzen beobachtet:
Die Pflanzen der ersten Probe, jene welche mit einer erfindungsgemässen Zusammensetzung behandelt wurden, erholen sich innert zwei Tagen. Die Pflanzen der zweiten Probe erholen sich in dieser Zeit nicht.

Wird eine Pflanze der zweiten Probe, welche zu Beginn nur mit Wasser behandelt wurde, am dritten Tag nachträglich mit der erfindungsgemässen Zusammensetzung aus Beispiel 1 behandelt, so kann sich diese Pflanze doch noch erholen. Wird keine nachträgliche Behandlung unternommen, so stirbt die Pflanze innert etwa einer Woche ab.

Ähnliche Ergebnisse werden erzielt, wenn die Pflanzen anstatt besprüht getränkt werden. Ähnliche Ergebnisse werden auch erzielt, wenn die Pflanzen anstatt vor dem Kälteschock nach dem Kälteschock behandelt, d.h. besprüht oder gegossen, werden.

### BEISPEIL 4

Rosmarin-Pflanzen der Art Rosmarinus Officinalis verteilt auf verschiedene Töpfe werden wie folgt besprüht:
1. Erste Proben: mit wässriger Lösung bestehend aus 1 mg α-Tocopherol, 50 ml Ethanol und 80 g Magnesiumchlorid pro Liter (gemäss Beispiel 1).
2. Zweite Proben: mit wässriger Lösung bestehend aus 1 mg α-Tocopherol und 50 ml Ethanol pro Liter.
3. Dritte Proben: mit wässriger Lösung bestehend aus 80 g Magnesiumchlorid pro Liter.
4. Vierte Proben: mit Leitungswasser.

Nach dem Besprühen wird den Pflanzen eine Ruhepause von einigen Stunden gegönnt. Danach werden die Pflanzen 4 Stunden lang einem Kälteschock bei -20°C ausgesetzt. Nach der Entnahme sind alle Pflanzen welk. Die Pflanzen werden nun mehrere Tage im Schatten belassen. Daraufhin wird der Zustand der Pflanzen am vierten Tag nach der Kälteschockbehandlung erneut beurteilt: die Pflanzen der Proben 2, 3 und 4 sind noch immer welk und weisen nun zusätzlich braune oder braun-gefleckte Blätter auf. Die Pflanzen der Probe 1 hingegen weisen grüne Blätter ohne braune Verfärbungen auf. Zusätzlich ist der Allgemeinzustand der Pflanzen der Probe 1 besser als jener der Pflanzen der Proben 2,3 und 4.

Die Pflanze der ersten Probe, jene welche mit einer erfindungsgemässen Zusammensetzung behandelt wurden, erholen sich also innert vier Tagen. Die Pflanzen der dritten und vierten Probe erholen sich in dieser Zeit nicht.

Ähnliche Ergebnisse werden erzielt, wenn die Pflanzen anstatt besprüht getränkt werden. Ähnliche Ergebnisse werden auch erzielt, wenn die Pflanzen anstatt vor dem Kälteschock nach dem Kälteschock behandelt, d.h. besprüht oder gegossen, werden.

### BEISPEIL 5

Saatgut des Eisbergsalats der Gattung Lactuca wurde nach dem Säen mit einer erfindungsgemässen Zusammensetzung nach Beispiel 1 getränkt. Nach vier Tagen zeigten sich die ersten Sprösslinge, während normalerweise erst nach Wochen solche zu erwarten sind. Eine Kontrollgruppe, welche mit Wasser alleine getränkt wurde, erzeugte in dieser kurzen Zeit noch keine Sprösslinge.

### BEISPEIL 6

Balkontomaten der Gattung Solanum sect. Lycopersicon werden zuerst mit der erfindungsgemässen Zusammensetzung aus Beispiel 1 bespritzt und nach einer Ruhestunde für ca. 2 Stunden bei 2°C gekühlt. Daraufhin werden die selben Pflanzen im Garten ins Erdreich eingepflanzt und nochmals mit der Zusammensetzung aus Beispiel 1 bespritzt.

Nach vier bis fünf Tagen haben sich verbrannte Stellen auf den Blättern ausgebildet, nach 7 Tagen jedoch entwickeln sich viele neue Triebe. Die Pflanze erholt sich erstaunlich schnell.

Pflanzen einer Vergleichsgruppe, welche für ca. 2 Stunden bei 2°C gekühlt und daraufhin im Garten ins Erdreich eingepflanzt wurden, erholten sich nicht sondern starben ab.

### BEISPEIL 7

Balkontomaten der Gattung Solanum sect. Lycopersicon werden mit der Zusammensetzung nach Beispiel 1 gegossen. Eine Vergleichsgruppe wird lediglich mit Wasser gegossen. Die so behandelten Pflanzen werden für ca. 6 Stunden bei -18°C gelagert. Daraufhin werden die selben Pflanzen im Garten in feuchtes Erdreich eingesteckt.

Die Pflanzen, welche mit der erfindungsgemässen Zusammensetzung gegossen wurden, erholten sich nach 5 Tagen vom Kälteschock. Die Pflanzen der Vergleichsgruppe starben ab.

## Patentansprüche

1. Pflanzenschutzmittel, Pflanzenregenerationsmittel und/oder Pflanzenwachstumsmittel
beinhaltend zumindest
- ein Alkalisalz oder ein Erdalkalisalz,
- eine Vitamin E-Verbindung,
- ein Lösungsmittel, und
- gegebenenfalls Wasser;
**dadurch gekennzeichnet, dass**
das Alkalisalz oder Erdalkalisalz zumindest Magnesiumchlorid beinhaltet.

2. Pflanzenschutzmittel, Pflanzenregenerationsmittel und/oder Pflanzenwachstumsmittel nach dem vorangehenden Anspruch, **dadurch gekennzeichnet, dass** die Vitamin E-Verbindung zumindest Tocopherol, insbesondere α-Tocopherol, enthält.

3. Pflanzenschutzmittel, Pflanzenregenerationsmittel und/oder Pflanzenwachstumsmittel nach einem der vorangehenden Ansprüche, **dadurch gekennzeichnet, dass** das Lösungsmittel einen Alkohol enthält, vorteilhafterweise Ethanol.

4. Pflanzenschutzmittel, Pflanzenregenerationsmittel und/oder Pflanzenwachstumsmittel nach einem der vorangehenden Ansprüche, **dadurch gekennzeichnet, dass** das Gewichtsverhältnis von Alkali- und/oder Erdalkalisalz zu Vitamin E-Verbindung mindestens 10'000 / 1 und gegebenenfalls maximal 500'000 / 1 beträgt, weiter bevorzugt das Gewichtsverhältnis von Alkali- und/ oder Erdalkalisalzverbindung zu Vitamin E-Verbindung im Bereich von 20'000 / 1 bis 320'000 / 1 liegt.

5. Pflanzenschutzmittel, Pflanzenregenerationsmittel und/oder Pflanzenwachstumsmittel nach einem der vorangehenden Ansprüche, **dadurch gekennzeichnet, dass** der Gehalt an der Vitamin E-Verbindung mindestens 0.5 mg/l, bevorzugt mindestens 1 mg/l beträgt.

6. Pflanzenschutzmittel, Pflanzenregenerationsmittel und/oder Pflanzenwachstumsmittel nach einem der vorangehenden Ansprüche, dass der Gehalt an der Alkali- oder Erdalkalisalzverbindung mindestens 40 g/l, bevorzugt mindestens 60 g/l beträgt.

7. Pflanzenschutzmittel, Pflanzenregenerationsmittel und/oder Pflanzenwachstumsmittel nach einem der vorangehenden Ansprüche, **dadurch gekennzeichnet, dass** der Gehalt an Lösungsmittel mindestens 5 ml/l, bevorzugt mindestens 10 ml/l, weiter bevorzugt mindestens 25 ml/l, beträgt.

8. Pflanzenschutzmittel, Pflanzenregenerationsmittel und/oder Pflanzenwachstumsmittel nach einem der vorangehenden Ansprüche, **dadurch gekennzeichnet, dass** diese eine wässrige Lösung bildet, welche
- Magnesiumchlorid, bevorzugt in einer Menge von wenigstens 40 g/l,
- ein Tocopherol, insbesondere α-Tocopherol, bevorzugt in einer Menge von wenigstens 0.5 mg/l,
- Ethanol, bevorzugt in einer Menge von wenigstens 5 ml/l enthält.

9. Verfahren zur Herstellung eines Pflanzenschutzmittels, Pflanzenregenerationsmittels und/oder Pflanzenwachstumsmittels nach einem der Ansprüche 1-8, enthaltend zumindest
- ein Alkalisalz oder ein Erdalkalisalz,
- eine Vitamin E-Verbindung,
- ein Lösungsmittel, und
- gegebenenfalls Wasser,
wobei das Alkalisalz oder Erdalkalisalz zumindest Magnesiumchlorid beinhaltet, **dadurch gekennzeichnet, dass**
die Vitamin E-Verbindung im Lösungsmittel aufgelöst wird und die dabei entstehende Lösung mit dem Alkalisalz oder dem Erdalkalisalz und gegebenenfalls dem Wasser vermischt wird.

10. Verfahren nach dem vorangehenden Anspruch 9, **dadurch gekennzeichnet, dass**
das Alkalisalz oder das Erdalkalisalz in Wasser aufgelöst wird und mit der Lösung gebildet aus Lösungsmittel und Vitamin E-Verbindung vermischt wird.

11. Verwendung des Pflanzenschutzmittels, Pflanzenregenerationsmittels und/ oder Pflanzenwachstumsmittels nach einem der Ansprüche 1-8 zum Tränken oder Besprühern von Pflanzen.

12. Verwendung nach dem vorangehenden Anspruch 11, **dadurch gekennzeichnet, dass** der Gehalt an der Vitamin E-Verbindung mindestens 0.5 mg/l, bevorzugt mindestens 1 mg/l beträgt, und optional der Gehalt an Lösungsmittel mindestens 5 ml/l, bevorzugt mindestens 10 ml/l, weiter bevorzugt mindestens 25 ml/l, beträgt.

13. Verwendung nach einem der Ansprüche 11-12, **dadurch gekennzeichnet, dass** der Gehalt an der Alkali- oder Erdalkalisalzverbindung mindestens 40 g/l, bevorzugt mindestens 60 g/l beträgt.

14. Verwendung des Pflanzenschutzmittels, Pflanzenregenerationsmittels und/oder Pflanzenwachstumsmittels nach einem der Ansprüche 1-8 zur Wachstumsförderung von Pflanzen, zur Regeneration von geschwächten Pflanzen, zur vorbeugenden Behandlung und Stärkung von Pflanzen gegen Umwelteinflüsse und/oder als Schutzmittel gegen Krankheiten, zum Beispiel gegen Pilzerkrankungen.

## Claims

1. Plant protection agent, plant regeneration agent and/or plant growth agent containing at least
- an alkali salt or an earth alkali salt,
- a vitamin E compound,
- a solvent and
- if necessary water,
**characterized in that** the alkali salt or the earth alkali salt contains at least magnesium chloride.

2. Plant protection agent, plant regeneration agent and/or plant growth agent according to the preceding claim, **characterized in that** the vitamin E compound contains at least tocopherol, in particular α-tocopherol.

3. Plant protection agent, plant regeneration agent and/or plant growth agent according to one of the preceding claims, **characterized in that** the solvent contains an alcohol, advantageously ethanol.

4. Plant protection agent, plant regeneration agent and/or plant growth agent according to one of the preceding claims, **characterized in that** the weight ratio of alkali salt and/or earth alkali salt to the vitamin E compound is at least 10000/1 and, if necessary, maximal 500000/1, more preferably the weight ratio of alkali salt and/or earth alkali salt to the vitamin E compound is in the range of 20000/1 to 320000/1.

5. Plant protection agent, plant regeneration agent and/or plant growth agent according to one of the preceding claims, **characterized in that** the vitamin E compound content is at least 0,5 mg/l, preferably at least 1 mg/l.

6. Plant protection agent, plant regeneration agent and/or plant growth agent according to one of the preceding claims, **characterized in that** the alkali salt or earth alkali salt compound content is at least 40 g/l, preferably at least 60 g/l.

7. Plant protection agent, plant regeneration agent and/or plant growth agent according to one of the preceding claims, **characterized in that** the solvent content is at least 5 ml/l, preferably at least 10 ml/l, more preferably at least 25 mg/l.

8. Plant protection agent, plant regeneration agent and/or plant growth agent according to one of the preceding claims, **characterized in that** it forms a aqueous solution that
- contains magnesium chloride, preferably in a quantity of at least 40 g/l,
- a tocopherol, in particular α-tocopherol, preferably in a quantity of at least 0,5 mg/l,
- ethanol, preferably in a quantity of at least 5 ml/l.

9. Method for producing a plant protection agent, plant regeneration agent and/or plant growth agent according to one of the claims 1 to 8 containing at least
- an alkali salt or an earth alkali salt,
- a vitamin E compound,
- a solvent and
- if necessary water,
whereby the alkali salt or the earth alkali salt contains at least magnesium chloride,
**characterized in that** the vitamin E compound is solved in the solvent and the resulting solution is mixed to the alkali salt or the earth alkali salt and, if necessary, to the water.

10. Method according to claim 9, **characterized in that** the alkali salt or the earth alkali salt is solved in water and is mixed to the solution of the solvent and the vitamin E compound.

11. Use of the plant protection agent, plant regeneration agent and/or plant growth agent according to one of the claims 1 to 8 for watering or spraying plants.

12. Use according to claim 11, **characterized in that** the vitamin E compound content is at least 0,5 mg/l, preferably at least 1 mg/l and optionally the solvent content is at least 5 ml/l, preferably at least 10 ml/l, more preferably at least 25 mg/l.

13. Use according to one of the claims 11-12, **characterized in that** the alkali salt or earth alkali salt compound content is at least 40 g/l, preferably at least 60 g/l.

14. Use of the plant protection agent, plant regeneration agent and/or plant growth agent according to one of the claims 1 to 8 for the growth promotion of plants, for the regeneration of weakened plants, for the preventive treatment and the strengthening of plants against environmental impacts and/or as protection means against diseases, for example fungal diseases.

## Revendications

1. Produit phytosanitaire, produit de régénération phytosanitaire et/ou produit pour la croissance des plantes contenant au moins
- un sel alcalin ou un sel alcalino-terreux,
- un composé de vitamine E,
- un solvant et
- le cas échéant de l'eau
**caractérisé en ce que** le sel alcalin ou le sel alcalino-terreux contient au moins du chlorure de magnésium.

2. Produit phytosanitaire, produit de régénération phytosanitaire et/ou produit pour la protection phytosanitaire selon la revendication précédente, **caractérisé en ce que** le composé de vitamine E contient au moins du tocophérol, en particulier de l'α-tocophérol.

3. Produit phytosanitaire, produit de régénération phytosanitaire et/ou produit pour la protection phytosanitaire selon l'une des revendications précédentes, **caractérisé en ce que** le solvant contient un alcool, de manière avantageuse de l'éthanol.

4. Produit phytosanitaire, produit de régénération phytosanitaire et/ou produit pour la protection phytosanitaire selon l'une des revendications précédentes, **caractérisé en ce que** le rapport de poids du sel alcalin et/ou du sel alcalino-terreux et du composé de vitamine E est d'au moins 10000/1 et, le cas échéant, au maximum de 500000/1, de manière plus préférée le rapport de poids du sel alcalin et/ou du sel alcalino-terreux et du composé de vitamine E est de l'ordre de 20000/1 à 320000/1.

5. Produit phytosanitaire, produit de régénération phytosanitaire et/ou produit pour la protection phytosanitaire selon l'une des revendications précédentes, **caractérisé en ce que** la teneur en composé de vitamine E est d'au moins 0,5 mg/l, de préférence d'au moins 1 mg/l.

6. Produit phytosanitaire, produit de régénération phytosanitaire et/ou produit pour la protection phytosanitaire selon l'une des revendications précédentes, **caractérisé en ce que** la teneur en sel alcalin ou en composé de sel alcalino-terreux est d'au moins 40 g/l, de préférence d'au moins 60 g/l.

7. Produit phytosanitaire, produit de régénération phytosanitaire et/ou produit pour la protection phytosanitaire selon l'une des revendications précédentes, **caractérisé en ce que** la teneur en solvant est d'au moins 5 ml/l, de préférence d'au moins 10 ml/l, de manière plus préférée d'au moins 25 ml/l.

8. Produit phytosanitaire, produit de régénération phytosanitaire et/ou produit pour la protection phytosanitaire selon l'une des revendications précédentes, **caractérisé en ce que** celui-ci forme une solution aqueuse
- qui contient du chlorure de magnésium, de préférence en une quantité d'au moins 40 g/l,
- un tocophérol, en particulier de l'α-tocophérol, de préférence en une quantité d'au moins 0,5 mg/l,
- de l'éthanol, de préférence en une quantité d'au moins 5 ml/l.

9. Procédé de fabrication d'un produit phytosanitaire, produit de régénération phytosanitaire et/ou produit pour la protection phytosanitaire selon l'une des revendications 1 à 8 qui contient au moins
- un sel alcalin ou un sel alcalino-terreux,
- un composé de vitamine E,
- un solvant et
- le cas échéant de l'eau,
le sel alcalin ou le sel alcalino-terreux contenant au moins du chlorure de magnésium,
**caractérisé en ce que** le composé de vitamine E est dissous dans le solvant et que la solution résultante est mélangée au sel alcalin ou au sel alcalino-terreux et, le cas échéant, à l'eau.

10. Procédé selon la revendication précédente 9, **caractérisé en ce que** le sel alcalin ou le sel alcalino-terreux est dissous dans l'eau et est mélangé à la solution formée de solvant et de composé de vitamine E.

11. Utilisation du produit phytosanitaire, produit de régénération phytosanitaire et/ou produit pour la protection phytosanitaire selon l'une des revendications 1 à 8 pour imprégner ou pulvériser des plantes.

12. Utilisation selon la revendication précédente 11, **caractérisée en ce que** la teneur en composé de vitamine E est d'au moins 0,5 mg/l, de préférence d'au moins 1 mg/l et en option la teneur en solvant est d'au moins 5 ml/l, de préférence d'au moins 10 ml/l, de manière plus préférée d'au moins 25 ml/l.

13. Utilisation selon l'une des revendications 11-12, **caractérisée en ce que** la teneur en sel alcalin ou en composé de sel alcalino-terreux est d'au moins 40 g/l, de préférence d'au moins 60 g/l.

14. Utilisation du produit phytosanitaire, produit de régénération phytosanitaire et/ou produit pour la protection phytosanitaire selon l'une des revendications 1 à 8 pour favoriser la croissance de plantes, pour la régénération de plantes affaiblies, pour le traitement préventif et la fortification de plantes face aux influences de l'environnement et/ou comme moyen de protection contre les maladies, par exemple contre les maladies fongiques.
